Europäisches Patentamt

European Patent Office

Office européen des brevets

(11) Publication number: **0 298 082**
**B1**

# EUROPEAN PATENT SPECIFICATION

(45) Date of publication of patent specification: **13.06.90**

(51) Int. Cl.⁵: **B 60 T 8/62**

(21) Application number: **87901731.7**

(22) Date of filing: **27.02.87**

(86) International application number:
**PCT/SE87/00097**

(87) International publication number:
**WO 87/05270 11.09.87 Gazette 87/20**

(54) **A METHOD AND ARRANGEMENT OF AUTOMATICALLY ACTUATING A VEHICLE WHEEL BRAKE WITH THE AIM OF PREVENTING THE WHEEL FROM SKIDDING.**

(30) Priority: **03.03.86 SE 8600943**

(43) Date of publication of application:
**11.01.89 Bulletin 89/02**

(45) Publication of the grant of the patent:
**13.06.90 Bulletin 90/24**

(84) Designated Contracting States:
**DE FR GB IT**

(56) References cited:
**US-A-3 584 921**
**US-A-3 790 227**
**US-A-3 820 855**
**US-A-3 917 353**
**US-A-3 958 834**
**US-A-4 230 376**

(73) Proprietor: **SWIDEN, Bror Lennart Anders**
**Box 38**
**S-590 61 Vreta Kloster (SE)**

(72) Inventor: **SWIDEN, Bror Lennart Anders**
**Box 38**
**S-590 61 Vreta Kloster (SE)**

(74) Representative: **Willquist, Bo Lorentz**
**PATS. Willquist Patents S:t Larsgatan 29**
**S-582 24 Linköping (SE)**

Courier Press, Leamington Spa, England.

## Description

The present invention relates to a method of automatically actuating a vehicle wheel brake with the aim of preventing the wheel from skidding in conjunction with braking and acceleration, for which purpose the instantaneous speed of rotation of the wheel is sensed and the instantaneous absolute speed variation is calculated from this, in conjunction with which the wheel brake is automatically released: during braking: either when the speed of rotation of the wheel reduces so that its absolute speed variation is greater than a predetermined value, or when the speed of rotation of the wheel approaches zero and the vehicle is still in motion;

during acceleration: when the speed of rotation of the wheel has fallen to the predetermined value after the brake has been applied and is applied automatically: during braking: when the speed of rotation of the wheel has increased to a predetermined value after the brake has previously been released;

during acceleration: when the speed of rotation of the wheel increases in such a way that its absolute speed variation is greater than the predetermined value, and in conjunction with which:

the wheel brake remains unaffected by the aforementioned automatic actuation when the absolute variation in the speed of rotation of the wheel is less than the aforementioned predetermined value, in conjunction with which the wheel brake is applied on braking and is released on acceleration, once a predetermined period has elapsed since the brake was released and applied.

The invention also relates to an arrangement which operates in accordance with the method.

US-A 3,917,353 contains an exhaustive description not only of the above-mentioned method, but also of a system which operates in accordance with the method, having regard for the difficulties which are associated with braking. A system which proposes to resolve similar problems during both braking and acceleration is described in US-A 3,584,921.

What is disclosed in US-A 3,958,834 is the re-application of the brake during braking once a predetermined period has elapsed since the brake was released automatically without the unbraked wheel having previously reached an acceleration threshold.

In spite of the fact that the above-mentioned system operates in an entirely satisfactory fashion, provided that the friction between the road surface and the wheel remains more or less constant, that is to say the road surface is either slippery or coarse, it has been found that the braking distance in particular becomes unnecessarily long because the system is unable to provide effective braking through having to take account of variable road surfaces.

The object of the present invention is to make available a method of preventing the wheel of the vehicle from skidding during both braking and acceleration, said object being made possible in that the aforementioned periods for automatic application reckoned from a previous automatic release during braking, and for automatic release reckoned from a previous automatic application during acceleration, are calculated as a percentage increment of time to be added to the period between a previous application/release during acceleration.

The invention is described below in more detail with reference to the accompanying drawing, in which Fig. 1 is a flow chart illustrating the method in accordance with the invention. Fig. 2 is a block diagram which illustrates in schematic form the construction of an arrangement in accordance with the invention, and Figs. 3a and 3b illustrate the rotational speed of the wheel for variable road surfaces as a function of time when braking and accelerating.

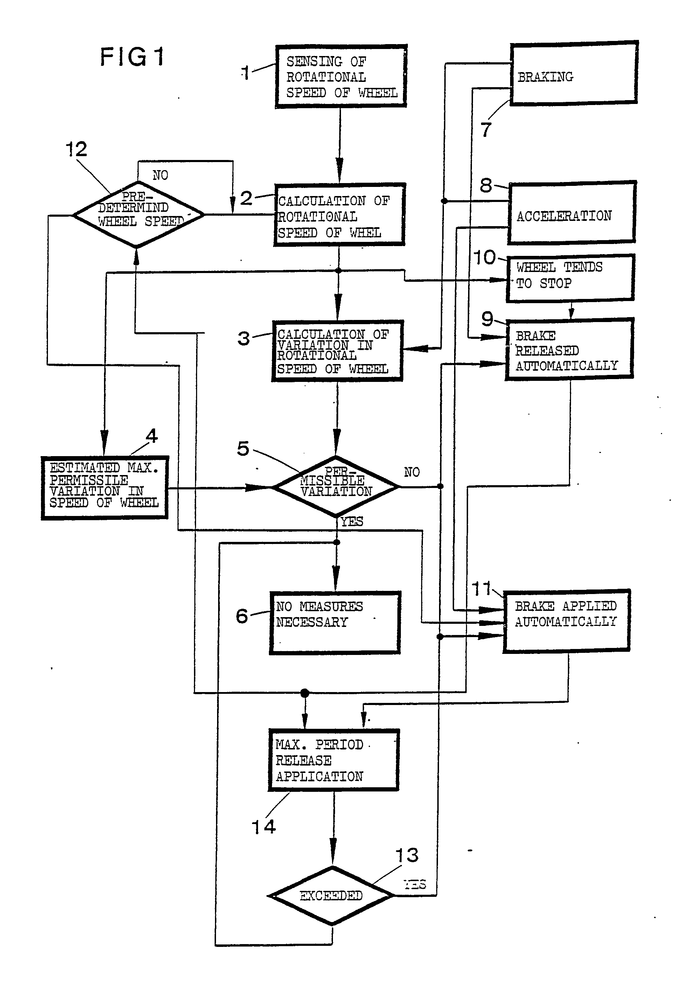

Reference is now made to the flow chart in accordance with Fig. 1, in which the designations 1, 2 and 3 are used in respect of three blocks which mark the sensing and calculation of the instantaneous speed of rotation of a vehicle wheel and the calculation of the instantaneous absolute variation in the speed of rotation of the wheel. One block 4 marks the calculation of a maximum permissible absolute variation in the speed of rotation for the instantaneous speed of rotation of the wheel. By comparing, in Block 5, the aforementioned values for the absolute variation in the speed of rotation with one another, an indication will be obtained of whether the instantaneous absolute variation in the speed of rotation exhibits the permitted (YES) value or does not (NO). It is clear that an unpermissibly high variation in the absolute speed of rotation can occur only during braking or acceleration, with the result that the wheel will skid or spin. Variations in the absolute speed of rotation of the wheel of less than the maximum permissible value do not call for any measures to be taken, as indicated in Block 6. Should the opposite situation exist, the measure actually taken will depend on whether the unpermissibly high variation in the absolute speed of rotation occurs during braking, Block 7, or during acceleration, Block 8.

During braking, Block 7, the wheel brake is released automatically, Block 9, either when the variation in the absolute speed of rotation of the wheel is greater than the maximum permissible variation, which is illustrated by alternative NO in Block 5 in Fig. 1, or when the speed of rotation of the wheel is approaching zero, when the wheel will tend to stop rotating, Block 10, and the vehicle is still in motion.

During braking, Block 7, the wheel brake is applied automatically, Block 11, once it has been established that the speed of rotation of the wheel has increased to a predetermined value after previously having released the brake. By comparing, in Block 12, the instantaneous speed of rotation 2 of the wheel with essentially the speed of rotation of the wheel at the time of application of the brake, Block 11, an indication will be obtained of whether the speed of rotation of the wheel has reached the predetermined value (YES) or has not (NO). In the latter case the comparison will continue to be made until YES is achieved.

In accordance with the invention a period, Block 14, is calculated for the automatic application, Block 11, of the brake, reckoned from the time of a previous automatic release, Block 9, during braking, Block 7, and for the automatic release, Block 9, of the brake, reckoned from a previous automatic application, Block 11, during acceleration, Block 8, as a percentage increment of time to be added to the period between a previous release/application during braking and a previous application/release during acceleration.

The brake is applied automatically, Block 11, when the estimated period has elapsed since the brake was released, Block 9. By comparing, Block 13, the period which has elapsed since the brake was released, Block 9, with the estimated period, Block 14, an indication will be obtained of whether the estimated period has elapsed (YES) or has not (NO). In the latter case this will result in no measure having to be taken, Block 6. YES means that the brake will be applied automatically.

During acceleration, Block 8, the brake is applied automatically, Block 11, when the estimated speed of rotation of the wheel, Block 2, increases in such a way that the variation in the absolute speed of rotation of the wheel, Block 3, is greater than the maximum permissible variation, Block 4. This situation corresponds to the NO alternative in Block 5 and indicates that the wheel is spinning, as a result of which the brake is applied automatically, as previously mentioned, Block 11. The YES alternative in Block 5 will, as previously, result in no measure having to be taken, Block 6.

During acceleration, Block 8, the wheel brake is released automatically, Block 9, once the speed of rotation of the wheel, Block 2, has fallen to the predetermined value, which is essentially identical with the speed of rotation of the wheel which existed at the time when the brake was applied automatically, Block 11. This comparison is illustrated as before by Block 12. The NO alternative in Block 12 means that the comparison will continue, whereas the YES alternative, as previously mentioned, means that the wheel brake will be released, Block 9.

The brake is applied, Block 11, and is released, Block 9, automatically once the estimated period, Block 14, has elapsed since the brake was released, Block 9, and applied, Block 11. The factor which determines whether the aforementioned measure is or is not to be taken is the YES/NO alternative in Block 13, the conditions relating to compliance with which are outlined above.

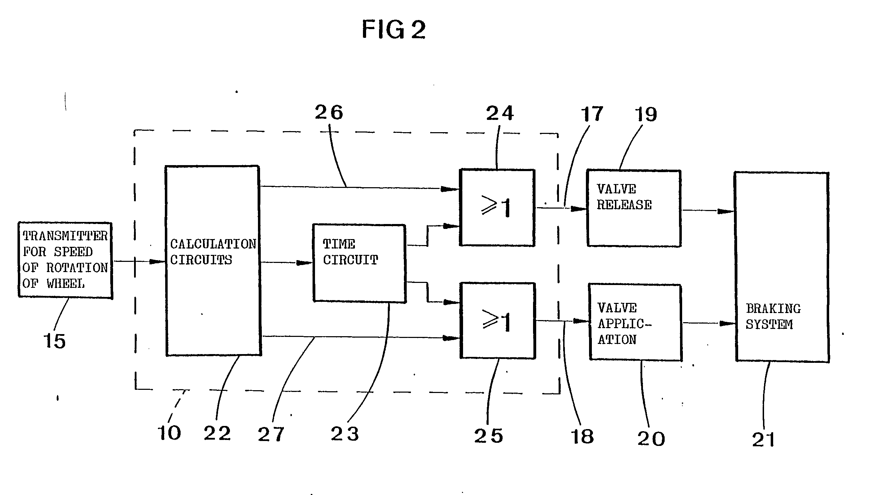

A design for an arrangement which operates in the manner described above in conjunction with Fig. 1 is illustrated by way of example in Fig. 2. The designation 15 is used in respect of a block which indicates a transmitter for the speed of rotation of the wheel, preferably a pulse generator arranged on a vehicle wheel, the instantaneous pulse frequency of which pulse generator corresponds to the instantaneous speed of rotation of the wheel. The transmitter 15 for the speed of rotation of the wheel is connected to a calculating device 16 with two outlets 17, 18, to which are connected valves 19, 20 for the release and application of the braking system 21 of the wheel. The calculating device 16 contains calculation circuits 22 for calculating the instantaneous absolute variation in the speed of rotation from the pulse signals from the transmitter 15, and for actuating the valves 19, 20, depending on the reaction of the wheel to braking and acceleration, for the application and release of the brake 21, as described in relation to Fig. 1.

According to the invention the calculation circuits 22 have connected to them a time circuit 23 with two outputs, each connected to an 'OR' gate 24 and 25, to which gates wires 26, 27 from the calculation circuits 22 are connected for the release and the application of the braking system 21. The transmitter 15 for the speed of rotation of the wheel and the calculation circuits 22 operate for this purpose essentially in the manner described in the patent publication referred to by way of introduction. The time circuit 23 is so arranged, starting from the release and application of the wheel brake 21 controlled by the calculation circuits 22, as to calculate the period referred to in connection with Fig. 1, to apply the wheel brake during braking and during acceleration, and to release the brake during acceleration once the aforementioned period has elapsed.

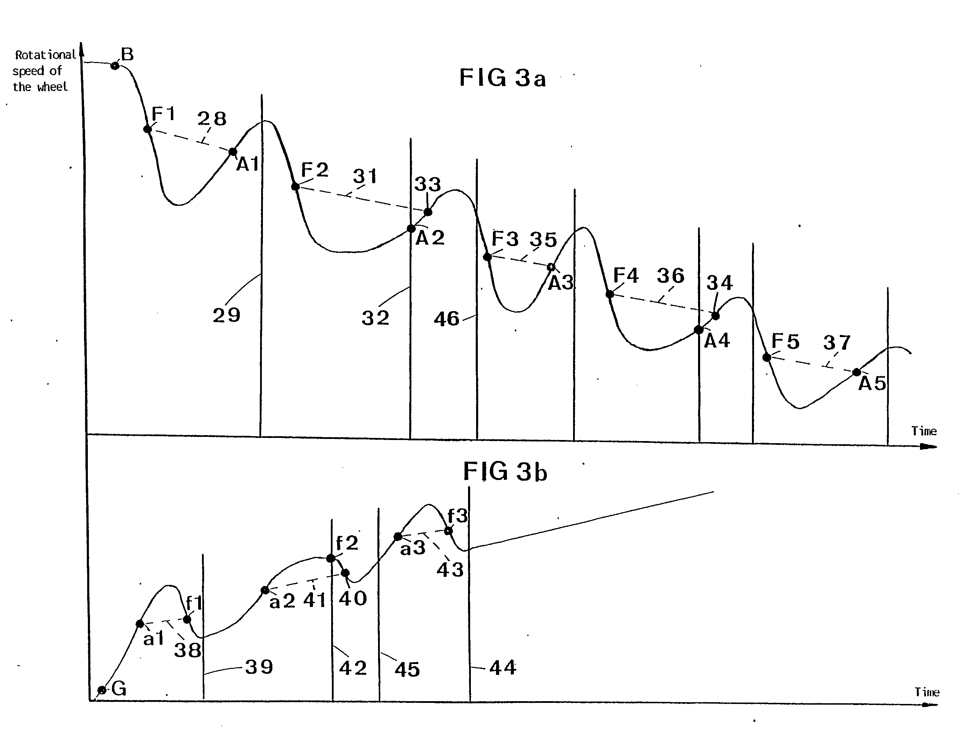

The method in accordance with the invention described above of actuating a vehicle wheel brake with the aim of preventing the wheel from skidding in conjunction with braking and acceleration is now described in more detail with reference to Figs. 3a and 3b.

Braking

It is assumed that braking, Block 7 in Fig. 1, starts at Point B, which means that the speed of rotation of the wheel falls rapidly. The variation in the absolute speed of rotation of the wheel, Block 3, will have become greater at Point Fl than the maximum permissible variation in the absolute speed of rotation, Block 4, which means that the wheel brake is released automatically, Block 9. Because of the moment of inertia of the mass of the wheel, the speed of rotation of the wheel will continue to fall, albeit at a reducing rate, until the moment of friction of the road surface first becomes identical with and then becomes greater than the moment of inertia of the mass of the wheel, at which point the speed of rotation of the wheel will increase once more.

Calculation of the previously mentioned predetermined speed of rotation of the wheel starts in conjunction with the release of the brake at Point F1. This can be calculated in many ways; in this particular case the calculation is made in such a way that the starting point is the value of the speed of rotation of the wheel at Point F1, which value is reduced by a certain amount per unit of time. The reducing value for the speed of rotation of the wheel is illustrated by means of a sloping line 28. At the Point A1, where the line 28 intersects the curve for the speed of rotation of the wheel, the speed of rotation of the wheel will have increased to the predetermined value since the previous release of the brake, and the brake will accordingly be applied automatically.

It is important to note that the period between Points F1 and A1 serves as a measure of the nature of the road surface against which the wheel is braked. This period, plus a percentage increment, is used as a measure of the predetermined period, Block 14, which is produced in Fig. 2 by means of the time circuit 23, and in accordance with the invention this means that the brake is automatically applied, if it had not previously been applied, through the speed of rotation of the wheel increasing to the predetermined value. The aforementioned period is illustrated in Fig. 3 as the distance between F1 and a vertical line 29. This period is stored for possible future use, as required, at Point F2.

Once the brake has been applied at Point A1, the speed of rotation of the wheel first continues to increase as a result of the moment of inertia of the mass of the wheel, although the speed of rotation decreases gradually before finally becoming a reduction in the speed of rotation. It is now assumed that the road surface has become less coarse than previously. As a result of this the reduction in the speed of rotation takes place rather more rapidly than during the previous operation; in other words the curve for the speed or rotation of the wheel exhibits a slightly more steep path than previously. As previously, the variation in the speed of rotation of the wheel becomes greater than the maximum permissible variation in the speed of rotation, as a result of which the brake is released automatically at Point F2.

As previously explained in connection with Point F1, the calculation on the one hand of the predetermined value for the speed of rotation of the wheel which the instantaneous speed of rotation of the wheel is to achieve in order for the brake to be re-applied, and on the other hand of the memorized period, following the elapse of which the brake is applied automatically, if this has not already taken place as a result of the first criterion, starts at the moment the brake is released. The calculation of the rotational speed of the wheel is based, as previously, on the speed of rotation of the wheel at Point F2 and results in a point of intersection 33 between the curve for the speed of rotation of the wheel and a line 31 with the same inclination as the line 28. A line 32 is used to indicate the end of the period memorized from Point F1 which starts at point F2 and is of the same duration as the period between F1 and the line 29. As a consequence of the reduced coarseness of the road surface, that is to say the flat path of the curve for the speed of rotation of the wheel after point F2, this is intersected first by the line 32 at a Point A2 and then by the line 31 at the aforementioned point 33, that is to say the brake is applied automatically in the manner which is characteristic of the invention, namely once a period calculated in accordance with the above has elapsed since the brake was released at the Point F2. The fact that the Point A2 precedes the point of intersection 33 chronologically thus means, when braking on a slippery surface in accordance with the invention, that the brake will be applied earlier than is the case when braking in a conventional manner. In the event of the instantaneous variation in the absolute speed of rotation of the wheel exceeding the maximum permissible variation in the speed of rotation of the wheel, the brake will be released automatically. Because the Point A2 precedes the Point 33 chronologically, the previously memorized period will be eliminated, and a new period from the Point 33 to a line 46 will be calculated, in conjunction with which calculation and storage of the period in the memory will take place as before.

Further braking is assumed to take place in the manner illustrated by the path of the curve for the speed of rotation of the wheel, in conjunction with which F3, F4 and F5 indicate points at which the wheel brake is released automatically, and A3, A4 and A5 similarly indicate that the brake is applied. The Points A3, 34 and A5 are thus obtained as points of intersection between the curve for the speed of rotation of the wheel and lines 35, 36 and 37, which start at F3, F4 and F5 and exhibit the same inclination as the lines 28 and 31, and the distance between each starting point and finishing point serves, as previously, as a measure of the nature of the road surface. The sections F3-A3 and F5-A5 exhibit a similar path to that of the section F1-A1, and the section F4-A4-34 is comparable to the section F2-A2-33.

It will be appreciated from the above that, when braking in accordance with the method to which the invention relates, the brake will automatically be applied earlier when driving on a slippery surface than during conventional automatic braking, but will be released in a conventional fashion once the variation in the absolute speed of rotation exceeds the maximum permissible variation. The method in accordance with the invention accordingly provides optimum adaptation to suit the nature of the road surface and thus the shortest possible braking distance.

Acceleration

It is assumed that acceleration, Block 8 in Fig. 1, takes place at a point G in Fig. 3b, at which point the wheel begins to turn from rest. The rotational speed of the wheel increases progressively as the vehicle begins to move. If the acceleration is greater than that which corresponds to the coarseness of the road surface, the wheel will lose its grip on the road surface and will begin to spin. The instantaneous variation in the absolute speed of rotation of the wheel, Block 3, will increase in conjunction with this, and is assumed at a point a1 to have become greater, Block 5, than the predetermined value, Block 4. The brake will now be applied automatically, Block 11. In spite of this the speed of rotation of the wheel will continue to increase initially until the braking moment is greater than the acceleration moment, when the speed of rotation of the wheel will decrease. The instantaneous speed of rotation of the wheel, Block 2, is compared continuously with the predetermined speed of rotation of the wheel, Block 12, which is calculated by a similar method to the corresponding calculation in conjunction with the braking described above. The basis of calculation is the speed of rotation of the wheel at the point a1, to which is added a certain amount per unit of time; the predetermined speed of rotation of the wheel is represented in Fig. 3b by a line 38. The wheel brake is released, Block 9, automatically once the instantaneous speed of rotation of the wheel, Block 2, has reduced, Block 12, to the predetermined value, which occurs at a point f1 at which the line 38 intersects the curve for the speed of rotation of the wheel. Once the wheel brake has been released, its speed of rotation will continue to decrease until the acceleration moment is greater than the moment of inertia of the mass of the wheel.

Similarly to the situation which exists during braking, the period a1-f1 serves as a measure of the nature of the road surface. This period, plus a percentage increment, serves as a measure of the estimated period, Block 14, and is obtained by means of the time circuit 23 in Fig. 2. According to the invention the wheel brake is released automatically during acceleration at the end of the aforementioned period, if it has not previously been released, through the speed of rotation of the wheel having decreased to the predetermined value, as described in conjunction with point f1. The period is illustrated in Fig. 3b as the distance between al and a vertical line 39.

Once the brake has been released at point f1, the rotational speed of the wheel continues to decrease as a result of the moment of inertia of the mass of the wheel, although the decrease in the speed of rotation reduces gradually before finally becoming an increase in the speed of rotation, since acceleration takes place continuously, of course. It is now assumed that the road surface has become coarser than previously, which means that the curve for the speed of rotation of the wheel exhibits a rather shallower path; in other words the wheel has found more grip. If the acceleration is too fierce, the variation in the absolute speed of rotation will still be greater than the maximum permissible value, as a consequence of which the brake will be applied automatically at the point a2.

As previously explained in conjunction with point a1, the calculation on the one hand of the predetermined value for the speed of rotation of the wheel, by which the instantaneous speed of rotation of the wneel requires to be increased in order for the brake to be released once more, and on the other hand of the memorized period, following the elapse of which the brake is released automatically, if this has not already taken place as a result of the first-mentioned criterion, starts at the moment a2 of application. The calculation of the speed of rotation of the wheel is based on the rotational speed at point a2 and results in a point of intersection 40 between the curve for the speed of rotation of the wheel and a line 41 with the same inclination as the line 38. A vertical line 42 is used to indicate the end of the period calculated from point a1, which starts at point a2 and is of the same duration as the period between a1 and the line 39. As a consequence of the increased coarseness of the road surface the curve for the speed of rotation of the wheel is first intersected by the line 42 at a point f2 and then by the line 41 at the point 40. This means that the brake is released in the manner which is characteristic of the invention at the point f2 once the predetermined memorized period has elapsed since the brake was applied at the point a2. As a consequence of this the previously memorized period is eliminated and a new period is calculated from the point 40 to a line 45, in conjunction with which the calculation of the period is performed and memorized as before.

The rest of the procedure during acceleration is assumed to take place in the manner illustrated by the curve for the rotational speed of the wheel, in conjunction with which a3 and f3 indicate points at which the brake is applied and released automatically. The point f3 is produced in this way as the point of intersection between the curve for the speed of rotation of the wheel and a line 43 which starts at the point a3 and exhibits the same inclination as the lines 38 and 41. The distance between the point a3 and a vertical line 44 corresponds to a period calculated by taking into account the nature of the road surface and similar to the period between a1 and the line 39.

It is obvious that the invention can be modified in many ways within the scope of the invention. Thus, for example, the calculation of the predetermined value for the speed of rotation of the wheel, which is performed in accordance with the above on the basis of the instantaneous speed of rotation of the wheel at the moment of release of the brake during braking and at the moment of application of the brake during acceleration, and is applied as a percentage reduction or increment per unit of time, can be performed in many other ways. The same is true of the calculation of the aforementioned period, on the elapse of which the brake is applied automatically during braking and is released automatically during acceleration.

## Claims

1. A method of automatically actuating a vehicle wheel brake with the aim of preventing the wheel from skidding in conjunction with braking (7) and acceleration (8), for which purpose the instantaneous speed of rotation of the wheel is sensed (1) and the instantaneous absolute speed variation (3) is calculated from this, in conjunction with which the wheel brake is automatically released (9): during braking (7): either when the speed of rotation (2) of the wheel reduces so that its absolute speed variation (3) is greater (5) than a predetermined value (4), or when the speed of rotation of the wheel approaches zero (10) and the vehicle is still in motion;

during acceleration (8): when the speed of rotation (2) of the wheel has fallen (12) to the predetermined value after the brake has been applied (11) and

is applied automatically (11): during braking (7): when the speed of rotation (2) of the wheel has increased to a predetermined value after the brake has previously been released (9);

during acceleration (8): when the speed of rotation (2) of the wheel increases in such a way that its absolute speed variation (3) is greater than the predetermined value, and in conjunction with which:

the wheel brake remains unaffected (6) by the aforementioned automatic actuation when the absolute speed variation (3) is less (5) than the aforementioned predetermined value (4), in conjunction with which the wheel brake is applied (11) on braking (7) and is released (9) on acceleration (8), once a predetermined period (14) has elapsed (13) since the brake was released (9) and applied (11), characterized in that the aforementioned period for automatic application, reckoned from a previous automatic release during braking, and for automatic release, reckoned from a previous automatic application during acceleration, are calculated as a percentage increment of time to be added to the period between a previous release/application during braking and a previous application/release during acceleration.

2. A method according to Patent Claim 1, characterized in that the aforementioned predetermined value for the rotational speed of the wheel is a function of the speed of rotation of the wheel which existed at the time of the previous application of the brake (11).

3. A method according to Patent Claim 1, characterized in that the aforementioned predetermined variation (4) in the speed of rotation of the wheel is approximately identical with the maximum variation in the speed of rotation of the wheel which can be achieved during braking on an icy surface.

4. A method according to Patent Claim 1, characterized in that the aforementioned predetermined speed of rotation of the wheel, at which the wheel brake is automatically applied during braking and is released during acceleration, is taken to be the instantaneous speed of rotation of the wheel at the moment of release and application, plus or minus a percentage increment or reduction.

5. An arrangement for the execution of the method in accordance with Patent Claim 1, comprising a pulse generator (15) arranged on a vehicle wheel, the instantaneous pulse frequency of which pulse generator corresponds to the instantaneous speed of rotation of the wheel, and a calculating device (16) connected between the pulse generator (15) and the brake (21) of the wheel, a time circuit (23) so arranged as to emit a signal once a predetermined period (14) has elapsed (13), and with circuits (22) for calculating the instantaneous variation in the speed or rotation of the wheel, so arranged depending on the reaction of the wheel to braking and acceleration as to actuate valves (19, 20) for the application and the release of the brake (21), in conjunction with which the aforementioned calculating device (16) is so arranged as to release the wheel brake (21) during braking, either when the speed of rotation of the wheel reduces during braking so that the variation in its speed of rotation is greater than a predetermined value, when the wheel tends to stop and the vehicle is still in motion;

during acceleration, when the speed of rotation of the wheel has fallen to the predetermined value after the brake (21) has been applied or the predetermined period (14) has elapsed (13) since the brake was applied (11) and to apply the wheel brake (21);

during braking, when the predetermined period has elapsed since the brake was previously released or when the rotational speed of the wheel has increased to a predetermined value after the brake (21) was previously released; during acceleration, when the speed of rotation of the wheel increases during acceleration so that the variation in its speed of rotation is greater than the predetermined value,

and to leave the wheel brake (21) unactuated by the aforementioned automatic actuation when the variation in the speed of rotation is less than the aforementioned predetermined value, characterized in that the time circuit (23) is so arranged as to calculate the predetermined period between a previous release/application during braking and a previous application/release during acceleration.

**Patentansprüche**

1. Verfahren zur automatischen Betätigung einer Kraftfahrzeugradbremse mit dem Ziel, ein Durchdrehen des Rades beim Zusammentreffen von Bremsen (7) und Beschleunigen (8) zu verhindern, wozu die momentane Drehzahl des Rades abgetastet (2) und die momentane absolute Drehzahländerung (3) aus dieser errechnet wird, im Zusammenhang mit welcher die Radbremse

automatisch gelöst (9) wird:

beim Bremsen (7): entweder, wenn die Drehzahl (2) des Rades abnimmt, so daß die absolute Drehzahländerung (3) größer (5) ist als ein vorgegebener Wert (4), oder, wenn sich die Drehzahl des Rades dem Wert Null (10) nähert und sich das Fahrzeug immer noch bewegt; beim Beschleunigen (8): wenn die Drehzahl (2) des Rades nach Betätigen (11) der Bremse auf einen vorgegebenen Wert zurückgegangen ist (12), und

automatisch aktiviert (11) wird: beim Bremsen (7): wenn die Drehzahl (2) des Rades nach dem vorherigen Lösen (9) der Bremse auf einen vorgegebenen Wert zugenommen hat;

beim Beschleunigen (8): wenn die Drehzahl (2) des Rades derart zugenommen hat, daß die absolute Drehzahländerung (3) größer als ein vorgegebener Wert ist,

und im Zusammenhang womit: die Radbremse durch die obenbezeichnete automatische Betätigung unbeeinflußt (6) bleibt, wenn die absolute Drehzahländerung (3) geringer (5) ist als ein vorgegebener Wert (4), in Zusammenhang mit welchem die Radbremse beim Bremsen (7) betätigt (11) und beim Beschleunigen (8) gelöst (9) wird, wenn seit dem Lösen (9) bzw. Betätigen (11) der Bremse eine vorgegebene Zeitspanne (9) verstrichen (13) ist, dadurch gekennzeichnet, daß

die obengenannte Zeitspanne für die automatische Betätigung, gerechnet von einem vorherigen automatischen Lösen während des Bremsvorgangs, und für das automatische Lösen, gerechnet von einem vorherigen automatischen Betätigen während des Beschleunigungsvorgangs, als prozentualer Zuwachs an zu der Zeitspanne zwischen einem vorherigen Lösen/Betätigen während dem Bremsen und einem vorherigen Betätigen/Lösen während dem Beschleunigen zu addierender Zeit berechnet wird.

2. Verfahren nach Anspruch 1, dadurch gekennzeichnet, daß der vorgenannte vorgegebene Wert für die Drehzahl des Rades eine Funktion der Drezahl des Rades zum Zeitpunkt der vorherigen Betätigung der Bremse (11) ist.

3. Verfahren nach Anspruch 1, dadurch gekennzeichnet, daß die vorgenannte vorgegebene Änderung (4) in der Drehzahl des Rades in etwa mit der maximalen, beim Bremsen auf einer vereisten Oberfläche möglichen Änderung in der Drehzahl des Rades identisch ist.

4. Verfahren nach Anspruch 1, dadurch gekennzeichnet, daß die vorgenannte vorgegebene Drehzahl des Rades, bei welcher die Radbremse beim Bremsen automatisch betätigt und beim Beschleunigen automatisch gelöst wird, so gewählt wird, daß sie die momentane Drehzahl des Rades zum Zeitpunkt des Lösens und der Betätigung plus oder minus einer prozentualen Zunahme oder Abnahme ist.

5. Anordnung zur Durchführung des Verfahrens nach Anspruch 1, welche aufweist: einen an einem Fahrzeugrad angeordneten Impulsgenerator (15), dessen momentane Impulsfrequenz der momentanen Drehzahl des Rades entspricht, und eine zwischen dem Impulsgenerator (15) und der Bremse (21) des Rades zwischengeschaltete Rechenvorrichtung (16), eine Zeitschaltung (23), die so angeordnet ist, daß sie nach Verstreichen (13) einer vorgegebenen Zeitspanne (14) ein Signal abgibt, und mit Schaltungen (22) zum Berechnen der momentanen Änderung in der Drehzahl des Rades, welche so angeorndet sind, daß sie in Abhängigkeit von der Reaktion des Rades auf das Bremsen und Beschleunigen Ventile (19, 20) für das Betätigen und das Lösen der Bremse (21) betätigen, wobei die vorgenannte Rechenvorrichtung (16) so angeordnet ist, daß sie

die Radbremse (21) beim Bremsen löst, wenn entweder die Drehzahl des Rades beim Bremsen abnimmt, so daß die Änderung seiner Drehzahl größer als ein vorgegebener Wert ist, wenn das Rad dazu neigt stehenzubleiben und sich das Fahrzeug noch bewegt; beim Beschleunigen die Drehzahl des Rades auf einen vorgegebenen Wert gefallen ist, nachdem die Bremse (21) betätigt wurde oder eine vorgegebene Zeitspanne (14) seit der Betätigung der Radbremse (21) verstrichen (13) ist,

die Radbremse (21) betätigt, wenn beim Bremsen die vorgegebene Zeitspanne seit dem vorherigen Lösen der Bremse verstrichen ist oder wenn die Drehzahl des Rades nach dem vorherigen Lösen der Bremse (21) auf einen vorgegebenen Wert angestiegen ist,

beim Beschleunigen die Drehzahl des Rades während der Beschleunigung zunimmt, so daß die Änderung in seiner Drehzahl größer als der vorgegebene Wert ist,

die Radbremse (21) nicht wie vorgenannt automatisch betätigt, wenn die Drehzahländerung geringer als der vorgegebene Wert ist, dadurch gekennzeichnet, daß

die Zeitschaltung (23) so angeordnet ist, daß sie die vorgegebene Zeitspanne zwischen einem vorherigen Lösen/Betätigen während dem Bremsen und einem vorherigen Betätigen/Lösen während dem Beschleunigen berechnet.

**Revendications**

1. Méthode d'actionnement automatique d'un frein de roulement de véhicule dans le but d'empêcher la roue de patiner lors d'un freinage (7) ou d'une accélération (8), but pour lequel la vitesse de rotation instantanée de la roue est détectée (1) et pour lequel la variation de vitesse instantanée absolue (3) est calculée sur la base de celle-ci, en liaison avec quoi le frein de roulement est automatiquement desserré (9):

pendant le freinage (7): lorsque la vitesse de rotation (2) de la roue diminue de sorte que sa variation de vitesse absolue (3) reste supérieure (5) à une valeur prédéterminée (4) ou bien lorsque la vitesse de rotation de la roue avoisine zéro (10) et que le véhicule est encore en mouvement;

pendant l'accélération (8): lorsque la vitesse de rotation (2) de la roue a chuté (12) jusqu'à la valeur prédéterminée après que le freinage ait été serré (11) et

est serré automatiquement (11): pendant le freinage (7): lorsque la vitesse de rotation (2) de la roue a augmenté jusqu'à une valeur prédéterminée après que le frein a précédemment été desserré (9);

durant l'accélération (8): lorsque la vitesse de rotation (2) de la roue augmente de manière telle que sa variation de vitesse absolue (3) est supérieure à la valeur prédéterminée et en liaison avec laquelle: le frein de roulement demeure non influencé (6) par l'actionnement automatique mentionné précédemment lorsque la variation de vitesse absolue (3) est inférieure (5) à la valeur prédéterminée (4) mentionnée précédemment en liaison avec laquelle le frein de roulement est serré (11) lors du freinage (7) et est desserré (9) en accélération (8), une fois qu'une période prédéterminée (14) s'est écoulée (13) du fait que le frein a été desserré et serré (11), caractérisé:

en ce que la période mentionnée précédemment pour un serrage automatique, calculée à partir d'un desserrement automatique antérieur pendant le freinage et pour un desserrement automatique calculé à partir d'un serrage automatique antérieure pendant l'accélération, sont calculés sous la forme d'un incrément en pourcentage de temps devant être ajouté à la période entre une précédente manoeuvre desserrage/serrage pendant le freinage et une précédente manoeuvre serrage/ desserrage pendant l'accélération;

2. Méthode selon la revendication 1, caractérisée:

en ce que la valeur prédéterminée sus-mentionnée de la vitesse de rotation de la roue est fonction de la vitesse de rotation de la roue qui existait au moment du serrage préalable du frein (11);

3. Méthode selon la revendication 1, caractérisée:

en ce que la variation prédéterminée (4) sus-mentionnée de la vitesse de rotation de la roue est approximativement indentique à la variation maximale de la vitesse de rotation de la roue qui peut être réalisée pendant un freinage sur une surface glacée;

4. Méthode selon la revendication 1, caractérisée:

en ce que la vitesse de rotation prédéterminée de la roue sus-mentionnée, pour laquelle le frein de roulement est automatiquement serré pendant le freinage et est desserré pendant l'accélération, est prise comme étant la vitesse de rotation instantanée de la roue au moment du desserage et du serrage, plus ou moins un pourcentage d'augmentation ou de réduction;

5. Disposition pour la mise en application de la méthode selon la revendication 1, comprenant:

un générateur d'impulsions (15) monté sur une roue de véhicule, la fréquence d'impulsions instantanée de ce générateur d'impulsions correspondant à la vitesse de rotation instantanée de la roue et un dispositif de calcul (16) connecté entre le générateur d'impulsions (15) et le frein (21) de la roue, un circuit de temporisation (23) étant organisé de façon à produire un signal après qu'une période prédéterminée (14) se soit écoulée (13) et comprenant des circuits (22) pour calculer la variation instantanée de la vitesse de rotation de la roue, organisés pour actionner des vannes (19, 20) en fonction de la réaction de la roue au freinage et à l'accélération de façon à serrer et à desserrer le frein (21) en liaison avec quoi le dispositif de calcul (16) sus-mentionné est organisé de façon à desserrer le frein de roulement (21) pendant le freinage, ou lorsque la vitesse de rotation de la roue diminue pendant le freinage de telle sorte que la variation de sa vitesse de rotation soit supérieure à une valeur prédéterminée, lorsque la roue tend à s'arrêter tandis que le véhicule est encore en mouvement;

pendant l'accélération lorsque la vitesse de rotation de la roue a chuté jusqu'à la valeur prédéterminée après que le frein (21) ait été mis serré ou que la période prédéterminée (14) se soit écoulée (13) depuis que le frein a été serré (11) et pour serrer le frein de roulement (21);

pendant le freinage, lorsque la période prédéterminée s'est écoulée depuis que le frein a été antérieurement desserré ou lorsque la vitesse de rotation de la roue a augmenté jusqu'à une valeur prédéterminée après que le frein (21) ait été antérieurement desserré; pendant l'accélération, lorsque la vitesse de rotation de la roue augmente pendant une accélération de telle sorte que la variation de sa vitesse de rotation soit supérieure à la valeur prédéterminée,

et pour laisser le frein de roulement (21) non activé par l'actionnement automatique sus-mentionné lorsque la variation de la vitesse de rotation est inférieure à la valeur prédéterminée sus-mentionnée, caractérisé en ce que le circuit de temporisation (23) est organisé de façon à calculer la période prédéterminée entre une précédente manoeuvre desserrage/serrage pendant le freinage et une précédente manoeuvre serrage/ desserrage pendant l'accélération.

# FIG 1

```
1 ─ SENSING OF ROTATIONAL SPEED OF WHEEL

7 ─ BRAKING

12 ─ PRE-DETERMIND WHEEL SPEED    NO

2 ─ CALCULATION OF ROTATIONAL SPEED OF WHEL

8 ─ ACCELERATION

10 ─ WHEEL TENDS TO STOP

3 ─ CALCULATION OF VARIATION IN ROTATIONAL SPEED OF WHEEL

9 ─ BRAKE RELEASED AUTOMATICALLY

4 ─ ESTIMATED MAX. PERMISSILE VARIATION IN SPEED OF WHEEL

5 ─ PER-MISSIBLE VARIATION    NO    YES

6 ─ NO MEASURES NECESSARY

11 ─ BRAKE APPLIED AUTOMATICALLY

14 ─ MAX. PERIOD RELEASE APPLICATION

13 ─ EXCEEDED    YES
```

## FIG 2

Rotational
speed of
the wheel

FIG 3a

B

F1    28

A1

F2    31

33

A2

F3  35

A3

F4    36    34

A4

F5    37

A5

29          32    46                                              Time

FIG 3b

f3

f2                a3

a2  41            43

a1        40

f1

38

G                 39          42    45    44                     Time

EP 0 298 082 B1

3